## Europäisches Patentamt
## European Patent Office
## Office européen des brevets

(11) Veröffentlichungsnummer: **0 181 953 B1**

# EUROPÄISCHE PATENTSCHRIFT

(45) Veröffentlichungstag der Patentschrift: **20.03.91**

(51) Int. Cl.⁵: **G06F 15/353**

(21) Anmeldenummer: **84113894.4**

(22) Anmeldetag: **16.11.84**

(54) Interpolator für Digitalsignale.

(43) Veröffentlichungstag der Anmeldung:
**28.05.86 Patentblatt 86/22**

(45) Bekanntmachung des Hinweises auf die
Patenterteilung:
**20.03.91 Patentblatt 91/12**

(84) Benannte Vertragsstaaten:
**DE FR GB IT NL**

(56) Entgegenhaltungen:
**EP-A- 0 022 642**
**GB-A- 2 078 406**
**US-A- 3 943 346**
**US-A- 4 074 308**
**US-A- 4 472 785**

**JOURNAL OF THE SOCIETY OF MOTION PIC-TURE AND TELEVISION ENGINEERS, Band 84, Nr. 7, Juli 1975, Seiten 545-551, Scardale, N.Y., US; J.P. ROSSI: "Digital television image enhancement"**

(73) Patentinhaber: **Deutsche ITT Industries GmbH**
**Hans-Bunte-Strasse 19 Postfach 840**
**W-7800 Freiburg i.Br.(DE)**

(72) Erfinder: **Mehrgardt, Sönke, Dr.**
**Häglestrasse 26**
**W-7801 March-Neuershausen(DE)**
Erfinder: **Schweer, Rainer, Dr.**
**Lärchenweg 14**
**W-7808 Waldkirch(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Verzögerungsschaltung für Digitalsignale, die mittels eines von einem Abtastsignal konstanter Abtastfrequenz getakteten Analog-Digital-Wandlers aus einem bandbegrenzten Analogsignal gebildet sind und die um ein wählbares unganzzahliges Vielfaches der Abtastperiodendauer in einem vom Abtastsignal getakteten digitalen Schaltungssystem zu verzögern sind. Dabei enthält die Verzögerungsschaltung folgende Teilschaltungen: ein erstes digitales Verzögerungsglied, dessen Verzögerungszeit gleich der Abtastperiodendauer ist, ein dem Verzögerungsglied nachgeschalteter erster Multiplizierer für einen Kleiner-Eins-Faktor b, der in einem ersten Parallelzweig angeordnet ist, ein zweiter Multiplizierer für den Faktor (1-b), der in einem zweiten Parallelzweig liegt, und ein erster Addierer, dessen erster bzw. zweiter Eingang mit dem Ausgang des ersten bzw. des zweiten Parallelzweigs verbunden ist, vgl. den Oberbegriff des Anspruchs 1.

Eine derartige Verzögerungsschaltung ist aus der GB-Patentanmeldung GB-A-2 078 406 für einen linearen Interpolator digitalisierter Abtastsignale bekannt.

Die Kombination derartiger Verzögerungsschaltungen oder Interpolatoren mit digitalen Filtern ist aus der US-Patentschrift US-A 4 472 785 bekannt. Die beschriebene Anordnung dient hierbei der Reduktion der Abtastfrequenz. Derartige Schaltungen werden auch als Dezimations-Stufen bezeichnet.

Bei digitalen Schaltungssystemen, die Digitalsignale im Takt eines frequenzkonstanten Taktsignals verarbeiten, wobei das Taktsignal identisch mit dem des die Digitalsignale aus einem Analogsignal erzeugenden Analog-Digital-Wandlers sein kann, ist mit einfachen Mitteln als kleinstmögliche Verzögerungszeit nur die Abtastperiodendauer realisierbar. Sollen in einem solchen System kleinere Verzögerungszeiten als die Abtastperiodendauer oder ungeradzahlige Vielfache davon realisiert werden, welche Aufgabe sich beispielsweise bei der Interpolation von Digitalsignalen stellt, so sind die Digitalsignale mittels einer für diesen Zweck konzipierten Verzögerungsschaltung zu verzögern, wenn es sich verbietet, die Frequenz des Taktsignals zu erhöhen, um durch die dadurch kürzer werdende Abtastperiodendauer kürzere Verzögerungszeiten zu erzielen.

Der in den Ansprüchen gekennzeichneten Erfindung liegt somit die Aufgabe zugrunde, für ein an einem festfrequenten Taktsignal betriebenes Schaltungssystem eine Verzögerungsschaltung für Digitalsignale anzugeben, die die Digitalsignale so beeinflußt, daß sie um ein unganzzahlig wählbares Vielfaches der Abtastperiodendauer verzögert erscheinen. Ferner sollen dabei sowohl der Amplituden- als auch der Phasenfrequenzgang der Verzögerungsschaltung optimal sein, wobei die gleichzeitige Optimierung beider Frequenzgänge im allgemeinen nur ausnahmsweise gelingen dürfte, jedoch je nach Anwendungsfall die Optimierung der einen unter Zurückstellung optimaler Bemessung der anderen im Sinne der Erfindung schon genügt.

Die Erfindung wird nun anhand der Figuren der Zeichnung näher erläutert.

Fig. 1   zeigt schematisch das Blockschaltbild eines im Stand der Technik bekannten Ausführungsbeispiels,

Fig. 2   zeigt das Blockschaltbild eines Ausführungsbeispiels der Erfindung, und

Fig. 3   zeigt das Blockschaltbild eines speziellen Ausführungsbeispiels der Anordnung nach Fig. 2.

Die Digitalsignale ds, die mittels eines in den Figuren nicht gezeigten Analog-Digital-Wandlers aus einem bandbegrenzten Analogsignal mittels eines Abtastsignals konstanter Abtastfrequenz gebildet sind, sind dem ersten digitalen Verzögerungsglied v1, dessen Verzögerung v gleich der Abtastperiodendauer ist, zugeführt. Die so verzögerten Digitalsignale sind dem am Ausgang des ersten Verzögerungsglieds v1 angeordneten ersten Multiplizierer m1 zugeführt, der auch mit dem Zahlenwert des Kleiner-Eins Faktor b der Abtastperiodendauer gespeist ist, um den die Digitalsignale ds auch verzögert werden sollen. Erstes Verzögerungsglied v1 und erster Multiplizierer m1 bilden den ersten Parallelzweig. Im zweiten Parallelzweig liegt der zweite Multiplizierer m2, dem einerseits der Faktor 1-b und andererseits die Digitalsignale ds zugeführt sind. Der Ausgang des ersten bzw. des zweiten Multiplizierers m1, m2 liegt am ersten bzw. zweiten Eingang des ersten Addierers a1, dessen Ausgang mit dem Eingang des digitalen Peaking-Filters pf verbunden ist. An dessen Ausgang sind die verzögerten Digitalsignale ds' abnehmbar,und es kompensiert den Amplitudenfrequenzgang der Teilschaltung aus den beiden Parallelzweigen und dem ersten Addierer a1 im Frequenzbereich bis zur halben Abtastfrequenz möglichst genau. Der Amplitudenfrequenzgang der erwähnten Teilschaltung hat nämlich bei der halben Abtastfrequenz eine Nullstelle.

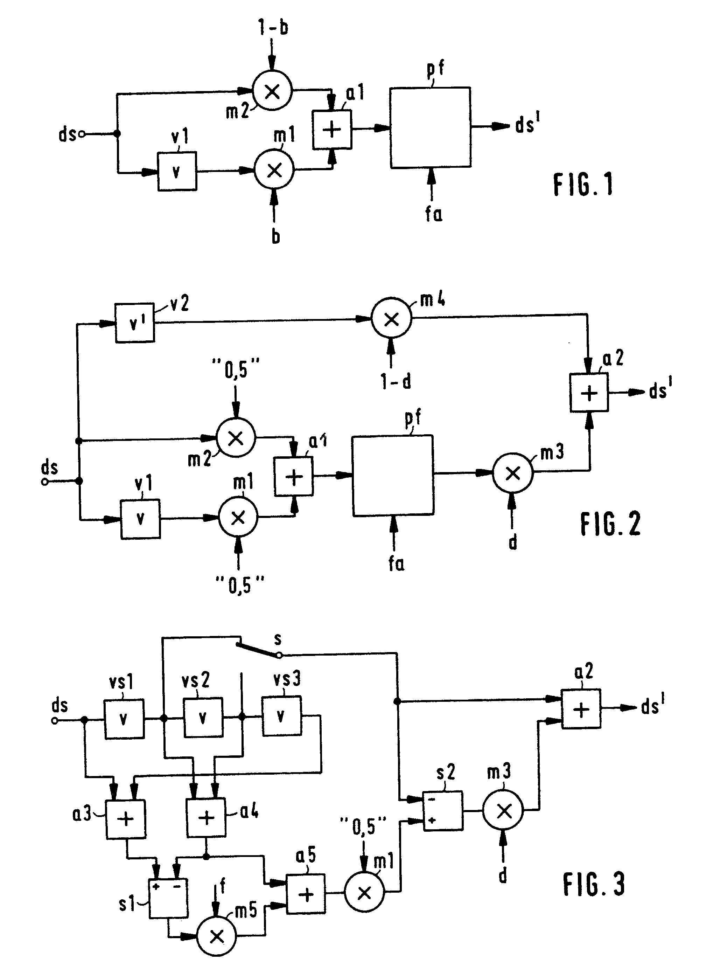

Die Verzögerungsschaltung nach Fig. 1 hat für unterschiedliche Zahlenwerte des Kleiner-Eins-Faktor b des unganzzahligen Vielfachen unterschiedliches Verhalten des Phasenfrequenzganges, welche Eigenschaft in bestimmten Anwendungsfällen unerwünscht ist.

Deshalb zeigt das Blockschaltbild nach Fig. 2 ein Ausführungsbeispiel einer weitergebildeten Verzögerungsschaltung. Im einzelnen ist eine Anordnung nach Fig. 1 für b = 0,5 verwendet, bei der am Ausgang des Peaking-Filters pf der dritte Multiplizierer m3 vorgesehen ist, dem der nunmehr mit d bezeichnete wählbare Teil der Abtastperiodendauer als zweites Eingangssignals zugeführt ist. Diesem einen Parallelzweig der Anordnung nach Fig. 2 ist in mit Fig. 1 vergleichbarer Weise ein weiterer Parallelzweig zugeordnet, der, vom Eingang der Gesamtanordnung aus gesehen, zunächst das zweite Verzögerungsglied v2 enthält, dessen Verzögerung v' gleich demjenigen ganzzahligen Vielfachen der Abtastperiodendauer ist, das das nächstniedere oder nächsthöhere zu der Gesamtverzögerung der Verzögerungsschaltung für b = 0,5 nach Fig. 1 ist, und der ferner den am Ausgang des zweiten Verzögerungsglieds v2 liegenden vierten Multiplizierer m4 enthält, dem der Faktor 1-d zugeführt ist. Der Ausgang des dritten bzw. des vierten Multiplizierers m3, m4 liegt am ersten bzw. zweiten Eingang des zweiten Addierers a2, an dessen Ausgang das verzögerte Digitalsignal ds' wiederum auftritt.

Im Bedarfsfall kann am Ausgang des zweiten Addierers a2 ein weiteres Peaking-Filter angeordnet werden.

Die Fig. 3 zeigt eine spezielle Ausführungsform der Anordnung nach Fig. 2 für ein einfaches Peaking-Filter mit der Übertragungsfunktion

$$H(z) = f + (1-2f)z^{-1} + fz^{-2},$$

wobei mit z bekanntlich die komplexe Frequenzvariable bezeichnet ist. In Fig. 3 sind die erste, die zweite und die dritte Verzögerungsstufe vs1, vs2, vs3 mit jeweils der Verzögerung v signalflußmäßig in Serie geschaltet, und der ersten Verzögerungsstufe vs1 ist das Digitalsignal ds eingangsseitig zugeführt. Dieses liegt auch am ersten Eingang des dritten Addierers a3 und deren Ausgang am ersten Eingang des vierten Addierers a4, mit dessen zweitem Eingang der Eingang der dritten Verzögerungsstufe vs3 verbunden ist, deren Ausgang am Eingang des dritten Addierers a3 liegt. Dessen Ausgang ist mit dem Minuendeingang und der Ausgang des vierten Addierers a4 mit dem Subtrahendeingang des ersten Subtrahierers s1 verbunden, dessen Ausgang über den fünften Multiplizierer m5 für den Peaking-Faktor f am ersten Eingang des fünften Addierers a5 angeschlossen ist, dessen zweiter Eingang am Ausgang des vierten Addierers a4 und dessen Ausgang über den ersten Multiplizierer m1 am Minuendeingang des zweiten Subtrahierers s2 liegt, an dessen Subtrahendeingang der Ausgang des elektronischen Umschalters s angeschlossen ist. Dessen erster Eingang liegt am Ausgang der ersten Verzögerungsstufe vs1 und sein zweiter Eingang am Ausgang der zweiten Verzögerungsstufe vs2. Der Ausgang des zweiten Subtrahierers s2 ist über den dritten Multiplizierer m3 mit dem ersten Eingang des zweiten Addierers a2 und der Ausgang des elektronischen Umschalters s mit dessen zweitem Eingang verbunden. Für eine Gesamtverzögerung der Schaltung zwischen v und 1,5·v ist der erste Eingang des elektronischen Umschalters s mit dessen Ausgang, für 1,5·v bis 2·v ist dessen zweiter Eingang mit dessen Ausgang zu verbinden.

Am Ausgang des ersten Multiplizierers m1 ergibt sich folgende Übertragungsfunktion

$$2H'(z) = f + (z^{-1} + z^{-2})(1-f) + z^{-3}f.$$

Es ist ersichtlich, daß die spezielle Ausführungsform der Fig. 3 eine bezüglich des Schaltungsaufwands minimierte Anordnung ist, so daß einige der Teilschaltungen nach Fig. 2 in Fig. 3 real zwar nicht vorhanden, jedoch ihre Funktion von anderen Teilschaltungen der Fig. 3 übernommen sind.

In den Figuren der Zeichnung sind der Übersichtlichkeit wegen die Verbindungsleitungen zwischen den einzelnen Teilschaltungen lediglich in Form von Strichen gezeichnet, im allgemeinen sind die Verbindungen jedoch Busse, da insbesondere für schnelle Signalverarbeitung parallele Verarbeitung üblich ist. In diesem Fall sind auch die einzelnen Teilschaltungen für solche Parallelverarbeitung geeignete Teilschaltungen, also beispielsweise Paralleladdierer, Parallelmultiplizierer etc.

Die Verzögerungsschaltung nach der Erfindung kann ohne weiteres in Form integrierter Schaltungen realisiert werden und insbesondere einen Teil einer größeren integrierten Schaltung bilden. Da es sich umreine Digitalsignalverarbeitung handelt, ist die Realisierung mittels Isolierschicht-Feldeffekt-Transistorschaltungen, also mittels der sogenannten MOS-Technik,besonders geeignet.

**Ansprüche**

1. Verzögerungsschaltung für Digitalsignale (ds), die mittels eines von einem Abtastsignal (fa) konstanter Abtastfrequenz getakteten Analog-Digital-Wandlers aus einem bandbegrenzten Analogsignal gebildet sind und die um ein wählbares unganzzahliges Vielfaches der Abtastperiodendauer in einem vom Abtastsignal (fa) getakteten digitalen Schaltungssgstem zu verzögern sind, wobei die Verzögerungsschaltung folgende Teilschaltungen enthält:
   - ein erstes digitales Verzögerungsglied (v1), dessen Verzögerungszeit (v) gleich der Abtastperiodendauer ist,
   - ein dem Verzögerungsglied (v1) nachgeschalteter erster Multiplizierer (m1) für einen Kleiner-Eins-Faktor (b), der in einem ersten Parallelzweig angeordnet ist,
   - ein zweiter Multiplizierer (m2) für den Faktor (1-b), der in einem zweiten Parallelzweig liegt, und

- ein erster Addierer (a1), dessen erster bzw. zweiter Eingang mit dem Ausgang des ersten bzw. des zweiten Parallelzweigs verbunden ist,

gekennzeichnet durch folgende Merkmale:

- dem ersten Addierer (a1) ist ein digitales und mit der Abtastfrequenz getaktetes Peaking-Filter (pf) nachgeschaltet, das den Amplitudenfrequenzgang der Teilschaltung aus den beiden Parallelzweigen und dem ersten Addierer (a1) im Frequenzbereich bis zur halben Abtastfrequenz möglichst kompensiert,
- der Kleiner-Eins-Faktor (b) ist gleich 0,5,
- dem Peaking-Filter (pf) ist ein dritter Multiplizierer (m3) für einen Kleiner-Eins-Faktor (d) des unganzzahligen Vielfachen nachgeschaltet, dessen Ausgang am ersten Eingang eines zweiten Addierers (a2) liegt,
- der Eingang der beiden Parallelzweige liegt über ein zweites digitales Verzögerungsglied (v2), dessen Verzögerung (v') gleich demjenigen ganzzahligen Vielfachen der Abtastperiodendauer ist, das das nächstniedere oder nächsthöhere zu der Gesamtverzögerung der Verzögerungsschaltung für b = 0,5 ist, und
- dem zweiten Verzögerungsglied (v2) ist ein vierter Multiplizierer (m4) für den Faktor (1-d) nachgeschaltet, dessen Ausgang am zweiten Eingang eines zweiten Addierers (a2) liegt.

2. Integrierte Verzögerungsschaltung nach Anspruch 1, gekennzeichnet durch folgende Merkmale:
    - es sind eine erste, und zweite und eine dritte Verzögerungsstufe (vs1 , vs2, vs3) mit jeweils einer Verzögerung (v) gleich der Abtastperiodendauer signalflußmäßig in Serie geschaltet,
    - der Eingang der ersten Verzögerungsstufe (vs1) liegt am ersten Eingang eines dritten Addierers (a3) und deren Ausgang am ersten Eingang eines vierten Addierers (a4), mit dessen zweitem Eingang der Eingang der dritten Verzögerungsstufe (vs3) verbunden ist, deren Ausgang am zweiten Eingang des dritten Addierers (a3) liegt,
    - der Ausgang des dritten Addierers (a3) ist mit dem Minuend-Eingang und der Ausgang des vierten Addierers (a4) mit dem Subtrahend-Eingang eines ersten Subtrahierers (s1) verbunden, dessen Ausgang über einen fünften Multiplizierer (m5) für einen Peaking-Faktor (f) am ersten Eingang eines fünften Addierers (a5) angeschlossen ist, dessen zweiter Eingang am Ausgang des vierten Addierers (a4) und dessen Ausgang über den ersten Multiplizierer (m1) am Minuend-Eingang eines zweiten Subtrahierers (s2) liegt, an dessen Subtrahend-Eingang der Ausgang eines elektronischen Umschalters (s) angeschlossen ist,
    - dessen erster Eingang liegt am Ausgang der ersten Verzögerungsstufe (vs1) und sein zweiter Eingang am Ausgang der zweiten Verzögerungsstufe (vs2),
    - der Ausgang des zweiten Subtrahierers (s2) ist über den dritten Multiplizierer (m3) mit dem ersten Eingang des zweiten Addierers (a2) und der Ausgang des elektronischen Umschalters (s) mit dessen zweitem Eingang verbunden, und
    - für eine Gesamtverzögerung der Anordnung zwischen v und 1,5v ist der erste Eingang des Umschalters (s) mit dessen Ausgang und für eine Gesamtverzögerung größer 1,5v bis 2v ist dessen zweiter Eingang mit dessen Ausgang zu verbinden.

## Claims

1. Delay circuit for digital signals (ds) which are formed from a band-limited analog signal by means of an analog-to-digital converter clocked by a sampling signal (fa) of fixed frequency, and which are to be delayed by a selectable nonintegral multiple of the sampling period in a digital circuit system clocked by the sampling signal (fa), the delay circuit including the following subcircuits:
    - a first digital delay element (v1) providing a delay (v) equal to the sampling period;
    - a first multiplier (m1 ) for a less-than-one factor (b) following the delay element (v1) in a first parallel branch;
    - a second multiplier (m2) for the factor (1-b) which is contained in a second parallel branch, and
    - a first adder (a1) having its first and second inputs connected to the outputs of the first and second parallel branches, respectively,

characterized by the following features:

    - The first adder (a1) is followed by a digital peaking filter (pf) which is clocked by the sampling signal (fa) and compensates, as far as possible, the amplitude-frequency response of the subcircuit formed by the two parallel branches and the first adder (a1) in the frequency range up to half the sampling frequency;

- the less-than-one factor (b) is 0.5;
- the peaking filter (pf) is followed by a third multiplier (m3) for a less-than-one factor (d) of the nonintegral multiple whose output is coupled to the first input of a second adder (a2);
- the input of the two parallel branches is connected to the input of a second digital delay element (v2) which provides a delay (v') equal to that integral multiple of the sampling period which is the next smaller or next greater one relative to the total delay of the delay circuit according to claim 1 for b = 0.5, and
- the second digital delay element (v2) is followed by a fourth multiplier (m4) for the factor (1-d) whose output is coupled to the second input of the second adder (a2).

2. An integrated delay circuit as claimed in claim 1, characterized by the following features:
- First, second, and third delay stages (vs1, vs2, vs3) each having a delay (v) equal to the sampling period are cascaded;
- the input of the first delay stage (vs1) is connected to the first input of a third adder (a3), and the output of the first delay stage (vs1) is coupled to the first input of a fourth adder (a4) having its second input connected to the input of the third delay stage (vs3), whose output is coupled to the second input of the third adder (a3);
- the output of the third adder (a3) is coupled to the minuend input, and the output of the fourth adder (a4) to the subtrahend input, of a first subtracter (s1) having its output connected via a fifth multiplier (m5) for a peaking factor (f) to the first input of a fifth adder (a5) whose second input is connected to the output of the fourth adder (a4) and whose output is coupled through the first multiplier (m1) to the minuend input of a second subtracter (s2) having its subtrahend input connected to the output of an electronic switch (s);
- the first input of the electronic switch (s) is connected to the output of the first delay stage (vs1), and the second input to the output of the second delay stage (vs2);
- the output of the second subtracter (s2) is coupled through the third multiplier (m3) to the first input of the second adder (a2), and the output of the electronic switch (s) is coupled to the second input of the second adder (a2), and
- for a total delay of the arrangement between v and 1.5v, the first input of the switch (s) must be connected to the output of the switch, and for a total delay greater than 1.5v to 2v, the second input of the switch must be connected to the output of the switch.

**Revendications**

1. Circuit de retardement pour des signaux numériques (ds), qui sont formés au moyen d'un convertisseur analogique/numérique commandé de façon cadencée par un signal d'échantillonnage (fa) possédant une fréquence d'échantillonnage constante, à partir d'un signal analogique à bande limitée et qui doivent être retardés d'un multiple non entier, pouvant être choisi, de la durée de la période d'échantillonnage dans un système de circuit numériuqe commandé de façon cadencée par le signal d'échantillonnage (fa), le circuit de retardement contenant les circuits partiels suivants:
- un premier circuit de retardement numérique (v1), qui produit un retard (v) égal à la durée de la période d'échantillonnage,
- un premier multiplicateur (m1) pour un facteur (b) inférieur à un, qui est branché en aval du circuit de retardement (V1), dans une première branche parallèle,
- un second multiplicateur (m2) pour le facteur (1-b), qui est situé dans une seconde branche parallèle, et
- un premier additionneur (a1), dont la première ou la seconde entrée est reliée à la sortie de la première ou de la seconde branche parallèle,
  caractérisé par les caractéristiques suivantes:

- en aval du premier additionneur (a1) est branché un filtre de peaking (pf) commandé de façon cadencée par la fréquence d'échantillonnage et qui compense dans toute la mesure du possible l'allure en fréquence d'amplitude du circuit partiel formé des deux branches parallèles et du premier additionneur (a1) dans la gamme des fréquences s'étendant jusqu'à la moitié de la fréquence d'échantillonnage,

- le facteur inférieur à (1b) est égal à 0,5,
- en aval du filtre de peaking (pf) est branché un troisième multiplicateur (m3) pour un facteur inférieur à (1d) du multiple non entier, dont la sortie est raccordée à la première entrée d'un second additionneur (a2),
- l'entrée des deux branches parallèles est raccordée par l'intermédiaire d'un second circuit de retardement numérique (v2), dont le retard (v') est égal au multiple entier de la durée de la période d'échantillonnage, qui est le multiple immédiatement inférieur ou immédiatement supérieur du retard global du circuit de retardement pour b = 0,5, et
- en aval du second circuit de retardement (v2) est branché un quatrième multiplicateur (m4) pour le facteur (1-d), dont la sortie est raccordée à la seconde entrée d'un second additionneur (a2).

2. Circuit intégré de retardement selon la revendication 1, caractérisé par les caractéristiques suivantes:
   - des premier, second et troisième étages de retardement (vs1, vs2, vs3) produisant respectivement un retard (v) égal à la durée de la période d'échantillonnage sont branchés en série dans le sens du flux de transmission des signaux,
   - l'entrée du premier circuit de retardement (vs1) est raccordée à la première entrée d'un troisième additionneur (a3), dont la sortie est raccordée à une entrée d'un quatrième additionneur (a4), à la seconde entrée duquel est raccordée l'entrée du troisième étage de retardement (vs3), dont la sortie est raccordée à la seconde entrée du troisième additionneur (a3),
   - la sortie du troisième additionneur (a3) est reliée à l'entrée du minuende et la sortie du quatrième additionneur (a4) est reliée à l'entrée du nombre à soustraire d'un premier soustracteur (s1), dont la sortie est raccordée par l'intermédiaire d'un cinquième circuit multiplicateur (m5) pour un facteur de peaking (f) à la première entrée d'un cinquième additionneur (a5), dont la seconde entrée est raccordée à la sortie du quatrième additionneur (a4) et dont la sortie est reliée par l'intermédiaire du premier multiplicateur (m1) à l'entrée du minuende d'un second soustracteur (s2), à l'entrée du nombre à soustraire duquel est raccordée la sortie d'un commutateur électronique (s),
   - dont la première entrée est raccordée à la sortie du premier étage de retardement (vs1) et dont la seconde entrée est raccordée à la sortie du second étage de retardement (vs2),
   - la sortie du second soustracteur (s2) est raccordée par l'intermédiaire du troisième multiplicateur (m3) à la première entrée du second additionneur (a2), et la sortie du commutateur électrique (s) est reliée à la seconde entrée de cet additionneur, et
   - pour l'obtention d'un retard global du dispositif compris entre v et 1,5v, la première entrée du commutateur (s) est reliée à sa sortie et pour un retard total supérieur à 1,5v jusqu'à 2v, la seconde entrée du commutateur est reliée à sa sortie.

FIG.1

FIG.2

FIG.3